## Europäisches Patentamt

## European Patent Office

## Office européen des brevets

(19)

(11) Veröffentlichungsnummer: **0 040 732**
**B1**

(12) # EUROPÄISCHE PATENTSCHRIFT

(45) Veröffentlichungstag der Patentschrift:
**15.02.84**

(51) Int. Cl.³: **F 16 K 31/122, F 15 B 15/18**

(21) Anmeldenummer: **81103523.7**

(22) Anmeldetag: **08.05.81**

(54) **Elektrohydraulischer Stellantrieb für Turbinenventile.**

(30) Priorität: **22.05.80 DE 3019602**

(43) Veröffentlichungstag der Anmeldung:
**02.12.81 Patentblatt 81/48**

(45) Bekanntmachung des Hinweises auf die Patenterteilung:
**15.02.84 Patentblatt 84/7**

(84) Benannte Vertragsstaaten:
**AT CH FR IT LI**

(56) Entgegenhaltungen:
**DE - A - 2 432 835**
**FR - A - 2 105 269**
**FR - A - 2 229 879**
**FR - A - 2 296 784**
**GB - A - 822 164**
**US - A - 3 046 743**
**US - A - 3 675 420**
**US - A - 3 827 669**
**US - A - 4 054 155**

(73) Patentinhaber: **KRAFTWERK UNION AKTIENGESELLSCHAFT, Wiesenstrasse 35, D-4330 Mülheim (Ruhr) (DE)**

(72) Erfinder: **Trassl, Werner, Dr., Lohbecker Berg 9, D-4330 Mülheim (Ruhr) (DE)**

(74) Vertreter: **Mehl, Ernst, Dipl.-Ing. et al, Postfach 22 01 76, D-8000 München 22 (DE)**

## Elektrohydraulischer Stellantrieb für Turbinenventile

Die Erfindung bezieht sich auf einen elektrohydraulischen Stellantrieb für Ventile, gemäss Oberbegriff des Anspruchs 1.

Ein solcher elektrohydraulischer Stellantrieb ist durch die US-A Nr. 4054155 im wesentlichen bekannt. Da bei diesem bekannten Stellantrieb ein Druckspeicher für die Hydraulikflüssigkeit fehlt, muss zur Betätigung des mit der Ventilspindel verbundenen Stellkolbens der Druck der Hydraulikflüssigkeit durch Einschalten eines mit der Hydraulikpumpe verbundenen Elektromotors erzeugt werden. Dieser Betätigungsmechanismus ist für Turbinenventile, mit denen sich die Erfindung befasst, zu langsam.

Durch die US-A Nr. 3675420 ist es zwar bekannt, mit einem elektrohydraulischen Stellantrieb für Ventile einen hydraulischen Druckspeicher zu vereinigen, jedoch werden bei diesem bekannten Stellantrieb die auf das Verschlussstück wirkenden Stellkolben nicht durch eine mechanische Kraftspeicherfeder, im Sinne einer schnellen Schliessbewegung, rückstellend federbelastet, vielmehr werden sie mittelbar durch eine Gasfeder belastet. Diese könnte zwar als mechanische Feder ausgebildet sein, da jedoch für die Rückführung in die Nullstellung des Ventil-Verschlussstückes das Hydraulikmedium herangezogen ist, so kann bei diesem Stellantrieb von einer Eigensicherheit, wie sie für Turbinenventile verlangt wird, nicht die Rede sein. Träte nämlich ein Leck in dem auf die Stellkolben wirkenden Hydraulikkreis ein, so wäre die automatische Einnahme der Schliessstellung im Falle des Ausfalls der Versorgungsenergie nicht mehr gewährleistet.

Durch die DE-A Nr. 2842846 ist ein elektrohydraulischer Stellantrieb für das Regenventil einer Dampfturbine bekannt, welcher durch die Regelsignale bzw. Schnellschlusssignale einer elektrischen Turbinenregelung angesteuert wird, wobei diese elektrischen Signale in einem elektrohydraulischen Umformer in hydraulische Signale umgewandelt und derart hydraulisch verstärkt werden, dass mit Hilfe des hydraulischen Stellzylinders die für die Steuerung des Regelventils erforderlichen grossen Stellkräfte aufgebracht werden können. Das hydraulische Versorgungssystem ist bis auf einen hydraulischen Druckspeicher nicht näher dargestellt oder beschrieben.

Im Turbinenbau erfolgt die Versorgung der Stellantriebe der einzelnen Turbinenventile mit hydraulischer Energie stets über ein zentrales hydraulisches Versorgungssystem, welches einen zentralen Hydraulikflüssigkeitsbehälter und meistens mehrere gegen hydraulische Druckspeicher arbeitende Flüssigkeitspumpen umfasst. Für die Verbindung eines Stellantriebes mit dem zentralen hydraulischen Versorgungssystem sind also mindestens zwei Rohrleitungen erforderlich, wobei eine Rohrleitung die unter hohen Druck stehende Hydraulikflüssigkeit zuführt und die andere Rohrleitung, die bei einer Entlastung der hydraulischen Bauteile ablaufende Hydraulikflüssigkeit in den zentralen Hydraulikflüssigkeitsbehälter zurückführt. Um die Übertragungssicherheit der hydraulischen Energie zu gewährleisten, erfordern diese Rohrleitungen einen erheblichen Aufwand für Konstruktion, Qualitätssicherung und Wartung. Ausser Druckspitzen und Schwingungen in langen Leitungen ist insbesondere auch die Beanspruchung durch Wärmedehnung zu berücksichtigen. Schliesslich ist auch noch die von einem Bruch der Leitungen im Warmbereich ausgehende Brandgefahr zu berücksichtigen. In diesem Zusammenhang werden im Hinblick auf den Brandschutz schwer brennbare Hydraulikflüssigkeiten eingesetzt. Derartige schwer brennbare Hydraulikflüssigkeiten sind jedoch kostspielig und erfordern aufgrund ihrer geringen Stabilität gegenüber Hydraulikflüssigkeiten auf Mineralölbasis aufwendige Pflegemassnahmen. Auch der im Interesse des Brandschutzes erfolgende Einsatz doppelwandiger Rohre bringt hinsichtlich Verlegung und Zugänglichkeit erhebliche Probleme mit sich.

Der Erfindung liegt die Aufgabe zugrunde, den elektrohydraulischen Stellantrieb für Ventile gemäss Gattungsbegriff so auszubilden, dass er einerseits den auf dem Gebiet des Turbinenbaues gestellten Anforderungen hinsichtlich Stellkraft und Stellgeschwindigkeit genügt und andererseits die mit der Übertragung der hydraulischen Energie zusammenhängenden Probleme vermeidet. Aufgabe der Erfindung ist es auch, zu ermöglichen, dass bei Zuordnung eines elektrohydraulischen Druckspeichers zum Stellantrieb gemäss Gattungsbegriff das für den Druckspeicher, den hydraulischen Stellzylinder und die Flüssigkeitspumpe erforderliche Bauvolumen als Funktion einer vorgegebenen Stellkraft, des Förderstromes und -druckes der Flüssigkeitspumpe, des Speichervolumens, des hydraulischen Druckspeichers und der wirksamen Fläche des Stellkolbens des hydraulischen Stellzylinders minimiert werden kann.

Erfindungsgemäss wird die gestellte Aufgabe bei einem elektrohydraulischen Stellantrieb für Ventile gemäss Obergriff des Anspruchs 1 durch die im Kennzeichen des Anspruchs 1 angegebenen Merkmale gelöst.

Die mit der Erfindung erzielbaren Vorteile sind vor allem darin zu sehen, dass nun auch auf dem Gebiet der Turbinentechnik durch die Integration des hydraulischen Versorgungssystems in den Stellantrieb die bisher erforderlichen Hydraulikzuleitungen und der mit diesem Leitungen verbundene Aufwand entfallen können. Für die Energieversorgung des Stellantriebes und für die Zuleitung der Regelsignale bzw. Schnellschlusssignale sind nur noch elektrische Kabel erforderlich, welche im Hinblick auf Übertragungssicherheit und Brandschutz keinerlei Probleme aufwerfen. Durch das redundante Pumpensystem gemäss Merkmal c von Anspruch 1 wird gewährleistet, dass bei Vorhandensein der Versorgungsenergie und Störung bei einer Motor-Pumpen-Einheit der Weiterbetrieb durch die andere Einheit möglich ist.

Eine weitere Erhöhung der Betriebssicherheit des elektrohydraulischen Stellantriebs kann durch die Massnahmen nach Anspruch 2 erzielt werden. In diesem Falle wird – ebenso wie bei den redundanten Flüssigkeitspumpen – der Erhöhung der Betriebssicherheit vor der Minimierung des Bauvolumens des gesamten Antriebsblocks der Vorzug gegeben, womit jedoch der Minimierung der Bauvolumina der mehrfach vorhandenen Bauteile eine um so grössere Bedeutung zukommt.

Der Einsatz elektrohydraulischer Stellantriebe mit einem in den Antriebsblock integrierten hydraulischen Versorgungssystem ist auf dem Gebiet der Eisenbahnsignaltechnik bereits bekannt. In der «Siemens-Zeitschrift», 52 (1978), Heft 1, Seiten 37 bis 39, ist ein elektrohydraulischer Schrankenantrieb für Bahnübergangs-Sicherungsanlagen beschrieben, welcher ein eigenes aus Hydraulikflüssigkeitsbehälter und Flüssigkeitspumpe bestehendes hydraulisches Versorgungssystem besitzt und mit dem Zentralstellwerk lediglich über ein Stromkabel und ein Kabel für die Signalzuleitung verbunden ist. Eine Übertragung dieses auf dem Gebiet der Eisenbahnsignaltechnik vorhandenen Wissensstandes auf den Turbinenbau ist jedoch, abgesehen von dem fehlenden technologischen Zusammenhang dieser Gebiete, nicht ohne weiteres möglich. So kann bei dem elektrohydraulischen Schrankenantrieb der integrierte Antriebsblock problemlos direkt auf einem eigenen Fundament angeordnet werden, während der Stellantrieb eines Turbinenventils unter beengten Platzverhältnissen am Ventilgehäuse angeordnet werden muss. Das Bedürfnis, den Stellantrieb eines Turbinenventils so klein und so leicht wie möglich auszuführen, steht somit einer Integration des hydraulischen Versorgungssystems in den Antriebsblock zunächst entgegen. Ausserdem wird mit der Aufnahme des hydraulischen Versorgungssystems in den Stellantrieb der Turbinenventile ein auf dem Gebiet des Turbinenbaues völlig neuer Weg beschritten, da die hydraulischen und elektrohydraulischen Stellantriebe auf diesem Gebiet eine stets an der zentralen hydraulischen Versorgung orientierte Entwicklung genommen haben.

Anhand der Zeichnung sind Aufbau und Wirkungsweise eines Ausführungsbeispiels nach der Erfindung näher erläutert.

Dabei zeigen:

Fig. 1 einen elektrohydraulischen Stellantrieb in stark vereinfachter schematischer Darstellung,

Fig. 2 einen Längsschnitt durch einen elektrohydraulischen Stellantrieb für das Regelventil einer Dampfturbine,

Fig. 3 einen Schnitt gemäss der Linie III-III der Fig. 2, und

Fig. 4 einen Schnitt gemäss der Linie IV-IV der Fig. 2, wobei die Darstellungen in Fig. 3 und 4 im Vergleich zu Fig. 2 um 90° um die Ventilachse gedreht sind.

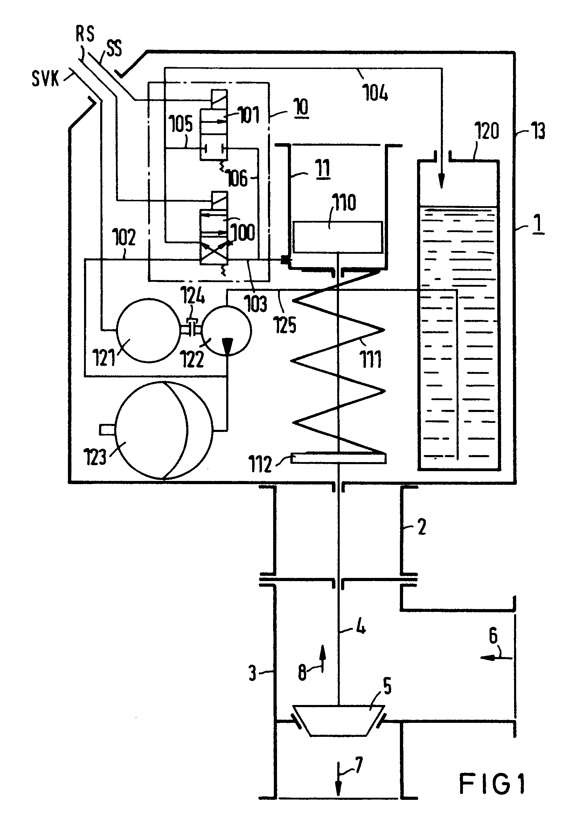

Fig. 1 zeigt einen insgesamt mit 1 bezeichneten elektrohydraulischen Stellantrieb, welcher über ein Zwischengestell 2 mit einem Turbinenventil 3 zusammengebaut ist. Die Betätigung des Turbinenventils 3 durch den elektrohydraulischen Stellantrieb 1 erfolgt über eine Verbindungsstange 4, an deren unterem Ende der in Schliessstellung gezeichnete Ventilkegel 5 befestigt ist. Der durch die Pfeile 6 und 7 angedeutete Durchfluss durch das Turbinenventil 3 wird durch einen entsprechenden Hub der Verbindungsstange 4 in der durch einen Pfeil 8 angedeuteten Öffnungsrichtung eingestellt.

Der elektrohydraulische Stellantrieb 1 besteht im wesentlichen aus einem elektro-hydraulischen Umformer 10, einem hydraulischen Stellzylinder 11 und einem hydraulischen Versorgungssystem, welches eine aus einem Hydraulikflüssigkeitsbehälter 120 gespeiste und von einem Elektromotor 121 angetriebene Flüssigkeitspumpe 122 und einen druckseitig an die Flüssigkeitspumpe angeschlossenen hydraulischen Druckspeicher 123 umfasst. Sämtliche vorstehend aufgeführten Bauteile sind zu einem kompakten, am Turbinenventil 3 angeordneten Antriebsblock integriert, wobei diese Integration der Bauteile in der schematischen Zeichnung durch ein gemeinsames Antriebsgehäuse 13 angedeutet ist.

Der elektro-hydraulische Umformer hat die Aufgabe, die von einer Turbinenregelung erzeugten elektrischen Signale in hydraulische Signale umzuwandeln. Hierzu sind bei dem dargestellten Ausführungsbeispiel ein von einem elektrischen Regelsignal RS angesteuertes 3/2-Wegeventil 100 und ein von einem elektrischen Schnellschlusssignal SS angesteuertes 2/2-Wegeventil 101 vorgesehen. Der erste Eingang des 3/2-Wegeventils 100 ist über eine Leitung 102 an den druckseitigen Ausgang der Flüssigkeitspumpe 122 und den hydraulischen Druckspeicher 123 angeschlossen. Der zweite Eingang des 3/2-Wegeventils 100 ist über eine Leitung 103 mit dem hydraulischen Stellzylinder 11 verbunden, während der dritte Eingang über eine Abflussleitung 104 an den Hydraulikflüssigkeitsbehälter 120 angeschlossen ist. Der erste Eingang des 2/2-Wegeventils 101 ist über eine Zweigleitung 105 an die Abflussleitung 104 und der zweite Eingang über eine Zweigleitung 106 an die Leitung 103 zum hydraulischen Stellzylinder 11 angeschlossen. Zum Öffnen des Turbinenventils 3 wird durch ein entsprechendes Regelsignal RS das 3/2-Wegeventil 100 so geschaltet, dass der Raum des hydraulischen Stellzylinders 11 unterhalb eines Stellkolbens 110 mit Hydraulikflüssigkeit aus dem hydraulischen Druckspeicher 123 beaufschlagt und der Ventilkegel 5 über die mit dem Stellkolben 110 verbundene Verbindungsstange 4 in der Öffnungsrichtung 8 bewegt wird. Bei dieser Öffnungsbewegung wird gleichzeitig eine Kraftspeicherfeder 111 gespannt, welche zwischen dem hydraulischen Stellzylinder 11 und einem an der Verbindungsstange 4 befestigten Teller 112 angeordnet ist. Zum Schliessen des Turbinenventils 3 wird das 3/2-Wegeventil 100 durch ein entsprechendes Regelsignal RS dann so geschaltet, dass die Hydraulikflüssigkeit unter dem Stellkolben 110 über die Abflussleitung 104 in den Hydraulikflüssigkeitsbehälter 120 abfliessen kann und die Federkraft der Kraftspeicherfeder 111 den Stellkolben 110 und den Ventilkegel 5 in Schliessrichtung entgegengesetzt zu dem Pfeil 8 bewegt. In entsprechender Weise wird zum Schnellschliessen des Turbinenventils 3 durch ein entsprechendes Schnellschlusssignal SS das 2/2-Wegeventil 101 geöffnet, so dass der Raum unterhalb des Stellkolbens 110 entlastet wird und die Kraftspeicherfeder 111 die schnelle Schliessbewegung bewirken kann.

In dem dargestellten Funktionsschema des elektrohydraulischen Stellantriebes 1 wurde für den elektro-hydraulischen Umformer 10 eine möglichst einfache Ausführungsform gewählt. Da die im Leistungsniveau sehr klein anfallenden Regelsignale RS und Schnellschlusssignale SS für die Erzeugung von grossen Stellkräften auf ein beispielsweise 10 000fach höher liegendes Leistungsniveau gebracht werden müssen, kann der elektro-hydraulische Umformer 10 auch eine oder mehrere hydraulische Verstärkungsstufen umfassen. Zur Erzeugung der benötigten hydraulischen Hilfsenergie wird über ein Stromversorgungskabel SVK elektrische Energie zugeführt, in dem Elektromotor 121 in mechanische Energie umgewandelt und schliesslich durch die über eine Kupplung 124 von dem Elektromotor 121 angetriebene Flüssigkeitspumpe 122 die Hydraulikflüssigkeit aus dem Hydraulikflüssigkeitsbehälter 120 über eine Saugleitung 125 angesaugt und in den hydraulischen Druckspeicher 123 gefördert. Der maximale Druck des gefüllten hydraulischen Druckspeichers 123 beträgt beispielsweise 160 bar. Um das Bauvolumen der Flüssigkeitspumpe 122 und des zugehörigen Elektromotors 121 möglichst gering zu halten, soll der von ihr erzeugte Förderstrom lediglich die im Betrieb auftretenden Leckagen der Hydraulikflüssigkeit ausgleichen und zusätzlich den hydraulischen Druckspeicher 123 langsam auffüllen können. Dies wird durch eine entsprechende Bemessung des Speichervolumens des hydraulischen Druckspeichers 123 ermöglicht. Der Bedarf an Hydraulikflüssigkeit für eine volle Öffnung des Turbinenventils 3 bzw. für im ungünstigsten Betriebsfall kurz aufeinanderfolgende Stellbewegungen muss vollständig aus dem hydraulischen Druckspeicher 123 gedeckt werden können.

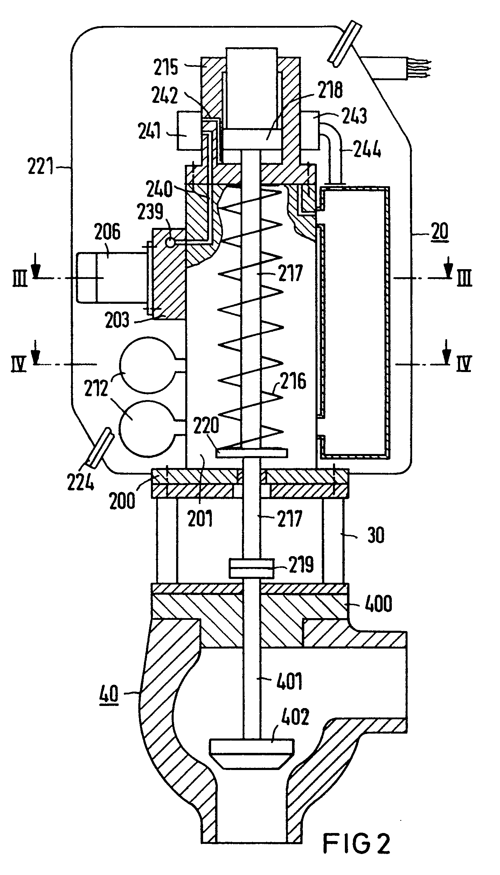

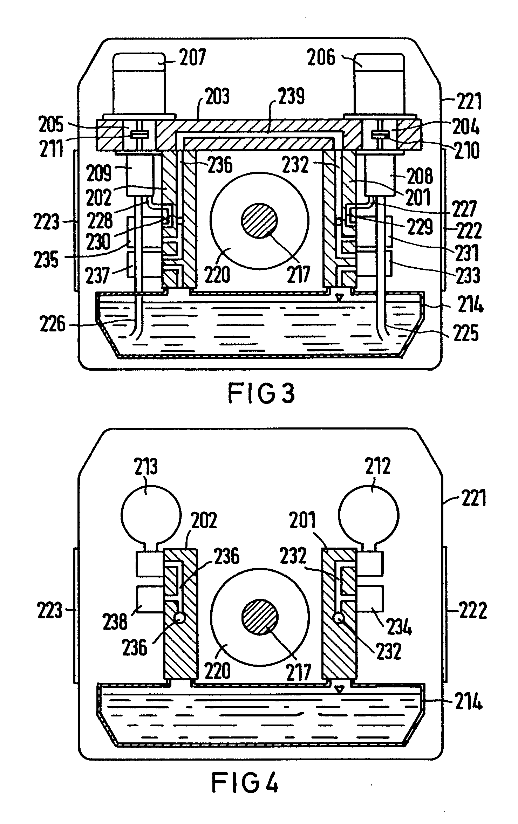

Die Fig. 2, 3 und 4 zeigen in vereinfachter Darstellung die konstruktive Ausführung eines elektrohydraulischen Stellantriebes für das Regelventil einer Dampfturbine. Der insgesamt mit 20 bezeichnete elektrohydraulische Stellantrieb ist hierbei von einem Säulengestell 30 getragen, welches seinerseits am Ventildeckel 400 des Regelventils 40 befestigt ist. Als Tragkonstruktion des elektrohydraulischen Stellantriebes 20 dienen eine an dem Säulengestell 30 befestigte Grundplatte 200, zwei senkrecht auf der Grundplatte 200 mit Abstand zueinander angeordnete Tragplatten 201 und 202 und eine stirnseitig an den Tragplatten 201 und 202 befestigte Stirnplatte 203. In die seitlich über den Tragplatten 201 und 202 überstehenden Endbereiche der Stirnplatte 203 sind Bohrungen 204 bzw. 205 eingebracht, so dass jeweils von aussen ein Elektromotor 206 bzw. 207 und von innen eine Flüssigkeitspumpe 208 bzw. 209 angeflanscht werden können. Hierbei ist die zur Verbindung des Elektromotors 206 mit der zugehörigen Flüssigkeitspumpe 208 vorgesehene Kupplung 210 innerhalb der Bohrung 204 und die zur Verbindung des Elektromotors 207 mit der zugehörigen Flüssigkeitspumpe 209 vorgesehene Kupplung 211 innerhalb der Bohrung 205 angeordnet.

Im Bereich zwischen der Stirnplatte 203 und der Grundplatte 200 sind insgesamt vier hydraulische Druckspeicher angeordnet, wobei zwei hydraulische Druckspeicher 212 seitlich an die Tragplatte 201 und zwei hydraulische Druckspeicher 213 seitlich an die Tragplatte 202 angeflanscht sind. Die beiden Tragplatten 201 und 202 dienen auch für die Befestigung eines Hydraulikflüssigkeitsbehälters 214 und eines hydraulischen Stellzylinders 215, wobei der Hydraulikflüssigkeitsbehälter 214 an den der Stirnplatte 203 gegenüberliegenden Stirnseiten angebracht ist, während der hydraulische Stellzylinder 215 an den der Grundplatte 200 gegenüberliegenden Enden befestigt ist. Durch diese Raumeinteilung kann der von den beiden Tragplatten 201 und 202, der Stirnplatte 203 und dem Hydraulikflüssigkeitsbehälter 214 begrenzte Raum für die Unterbringung einer Kraftspeicherfeder 216 und der Führungsstange 217 des hydraulischen Stellzylinders 215 genutzt werden. Die Führungsstange 217 verbindet den Stellkolben 218 des hydraulischen Stellzylinders 215 über eine Kupplung 219 mit einer Ventilspindel 401, welche an ihrem Ende den Ventilkegel 402 des Regelventils 40 trägt. Die Kraftspeicherfeder 216 ist auf der Führungsstange 217 zwischen einem an der Führungsstange 217 befestigten Teller 220 und dem hydraulischen Stellzylinder 215 derart angeordnet, dass sie bei einer Öffnung des Regelventils 40 durch einen entsprechenden Hub des Stellkolbens 218 gespannt wird und nach einer Entlastung des Stellkolbens 218 das Regelventil 40 zu schliessen vermag. Zur Verkleidung des elektrohydraulischen Stellantriebes 20 ist ein an der Grundplatte 200 befestigtes Gehäuse 221 vorgesehen, welches zwei seitliche Montagedeckel 222 und 223 besitzt und durch einen diagonal verlaufenden Flansch 224 geteilt ist. Das Gehäuse 221 hat auch die Aufgabe, bei Montage- und Wartungsarbeiten eventuell austretende Hydraulikflüssigkeit aufzufangen und somit eine mit dem unkontrollierten Austritt von Hydraulikflüssigkeit verbundene Brandgefahr von vornherein auszuschliessen. Zur Abfuhr der in dem elektrohydraulischen Stellantrieb 20 entstehenden Verlustwärme kann auch über ein in der Zeichnung nicht dargestelltes Gebläse Kühlluft zwischen dem Gehäuse 221 und dem ggf. mit Kühlrippen versehenen Hydraulikflüssigkeitsbehälter 214 hindurchgeführt werden.

Die beiden Tragplatten 201 und 202 und die Stirnplatte 203 haben ausser der vorstehend beschriebenen Aufgabe als Tragkonstruktion zusätzlich auch noch die Aufgabe, die daran befestigten Elemente miteinander zu verknüpfen, so dass Ver-

7         **0 040 732**         8

bindungsleitungen weitgehend entfallen können. Die beiden Flüssigkeitspumpen 208 und 209 sind saugseitig über Saugleitungen 225 bzw. 226 an den Hydraulikflüssigkeitsbehälter 214 angeschlossen, während druckseitig über kurze Leitungsbögen 227 bzw. 228 die Verbindung mit Kanälen 229 bzw. 230 der Tragplatten 201 bzw. 202 hergestellt ist. Der in die Tragplatte 201 eingebrachte Kanal 229 führt zu einem Rückschlagventil 231, welches über einen mehrfach aufgezweigten Kanal 232 mit dem Druckbegrenzungsventil 233 der Flüssigkeitspumpe 208, den hydraulischen Druckspeichern 212 und deren Begrenzungsventilen 234 verbunden ist. In gleicher Weise führt der in die Tragplatte 202 eingebrachte Kanal 230 zu einem Rückschlagventil 235, welches über einen mehrfach aufgezweigten Kanal 236 mit dem Druckbegrenzungsventil 237 der Flüssigkeitspumpe 209, den hydraulischen Druckspeichern 213 und deren Druckbegrenzungsventilen 238 verbunden ist. Die Druckbegrenzungsventile 233 und 237 sind durch nicht näher bezeichnete Kanäle mit dem Hydraulikflüssigkeitsbehälter 214 verbunden. Auch die Druckbegrenzungsventile 234 und 238 sind durch in der Zeichnung nicht dargestellte Kanäle mit dem Hydraulikflüssigkeitsbehälter 214 verbunden. Die Querverbindung zwischen den Flüssigkeitspumpen 208 und 209 und den hydraulischen Druckspeichern 212 und 213 erfolgt durch einen in die Stirnplatte 203 eingebrachten Querverbindungskanal 239 und entsprechende Abzweigungen der in die Tragplatten 201 bzw. 202 eingebrachten Kanäle 232 bzw. 236. Der Querverbindungskanal 239 stellt auch über einen weiteren, in die Tragplatte 201 eingebrachten Kanal 240 die Verbindung zwischen den hydraulischen Druckspeichern 212 und 213 und dem hydraulischen Stellzylinder 215 her. Der Kanal 240 führt zu einem ersten Modul 241 eines elektrohydraulischen Umformers, wobei dieser erste Modul 241 über einen Kanal 242 mit dem Raum unterhalb des Stellkolbens verbunden ist. Ein zweiter, an dem hydraulischen Stellzylinder 215 angebrachter Modul 243 des in der Zeichnung im übrigen nicht näher dargestellten elektro-hydraulischen Umformers ist über eine Abflussleitung 244 mit dem Hydraulikflüssigkeitsbehälter 214 verbunden, so dass bei einem Schliessen des Regelventils 40 die Hydraulikflüssigkeit aus dem Raum unterhalb des Stellkolbens 218 in nicht näher dargestellter Weise abgeführt werden kann.

Bei dem in den Fig. 2, 3 und 4 dargestellten Ausführungsbeispiel eines elektrohydraulischen Stellantriebes wird durch die tragende und gleichzeitig verbindende Funktion der aus Platten bestehenden Tragkonstruktion eine äusserst kompakte Bauweise des integrierten Antriebsblocks ermöglicht, wobei die Wartungsfreundlichkeit durch die übersichtliche und leicht zugängliche Anordnung der einzelnen Bauteile gewährleistet ist. Durch die hinsichtlich der Flüssigkeitspumpen und der hydraulischen Druckspeicher symmetrisch redundante Ausgestaltung des Antriebsblockes wird ausserdem eine hohe Betriebssicherheit erzielt.

**Patentansprüche**

1. Elektrohydraulischer Stellantrieb für Ventile, bestehend aus einem elektro-hydraulischen Umformer (10), einem hydraulischen Stellzylinder (11; 215) mit einem Stellkolben (110, 218), der einen Ventilkegel (5; 402) in Öffnungsrichtung beaufschlagen kann, wobei der Stellkolben (110, 218) bei Bewegung in oder Einnahme der Ventil-Öffnungsstellung durch eine Kraftspeicherfeder (111; 216) im Sinne einer schnellen Schliessbewegung rückstellend federbelastet ist, ferner bestehend aus einem Hydraulikflüssigkeitsbehälter (120; 214) und einer von einem Elektromotor (121; 206, 207) angetriebenen Flüssigkeitspumpe (122; 208, 209), wobei sämtliche Bauteile zu einem am Gehäuse des Ventils (3; 40) angeordneten kompakten Antriebsblock (13; 20) integriert sind, dadurch gekennzeichnet, dass

a) der Stellantrieb mit einem elektrisch angesteuerten Turbinenventil, insbesondere einem Regel-, Schnellschluss- oder Umleitventil, baulich vereinigt ist, dass

b) die Flüssigkeitspumpe (122; 208, 209) druckseitig mit einem hydraulischen Druckspeicher (123; 212, 213) solchen Speichervolumens verbunden ist, dass zumindest für eine volle Öffnungsbewegung des Ventils (3; 40) genügend Hydraulikflüssigkeit aus dem hydraulischen Druckspeicher zur Verfügung steht, wobei der Förderstrom der Flüssigkeitspumpe (122; 208, 209) zur ständigen Deckung von Leckverlusten und zum langsamen Auffüllen des hydraulischen Druckspeichers (123; 212, 213) ausgelegt ist, und dass

c) das hydraulische Versorgungssystem eine bei Ausfall der Flüssigkeitspumpe (122; 208) zuschaltbare zweite Flüssigkeitspumpe (209) umfasst, welche von einem zweiten Elektromotor (207) angetrieben ist.

2. Elektrohydraulischer Stellantrieb nach Anspruch 1, dadurch gekennzeichnet, dass der hydraulische Druckspeicher (123) in mindestens zwei Teilspeicher (212, 213) unterteilt ist, wobei das Speichervolumen der Teilspeicher derart bemessen ist, dass auch bei Ausfall eines Teilspeichers eine für die Betätigung des hydraulischen Stellzylinders (215) ausreichende Hydraulikflüssigkeitsmenge verfügbar ist.

**Revendications**

1. Servo-entraînement électro-hydraulique pour des vannes, constitué par un transducteur électro-hydraulique (10), par un cylindre de réglage hydraulique (11; 215) avec un piston de réglage (110, 218) qui peut charger, dans la direction de l'ouverture, un cône de soupape (5; 402), le piston de réglage (110, 218), lors de son déplacement dans la position d'ouverture de la soupape ou lorsqu'il atteint cette position étant chargé par un ressort accumulateur de force (111; 216) dans le sens d'un mouvement de retour rapide à la fermeture, constitué, en outre, par un réservoir à liquide hydraulique (120; 214) et par une pompe à liquide (122; 208, 209) entraînée par un moteur électrique (121; 206, 207), tous les éléments constitutifs étant intégrés pour former un bloc (13; 20) d'entraînement compact disposé sur le carter de la vanne (3; 40), caractérisé par le fait que:

a) l'organe de réglage est réuni, du point de vue de la construction, avec une vanne de turbine à commande hydraulique, en particulier avec une vanne de réglage ou une vanne à fermeture rapide ou une vanne de dérivation,

b) la pompe à liquide (122; 208, 209) est réunie, du côté refoulement, avec un accumulateur de pression hydraulique (123; 212, 213) ayant un volume d'accumulation qui est tel que l'on dispose, au moins pour un déplacement d'ouverture complet de la vanne (3; 40), d'assez de liquide hydraulique en provenance de l'accumulateur hydraulique de pression, le débit de la pompe à liquide (122; 208, 209) étant calculé pour couvrir en permanence les pertes par fuites et pour le remplissage lent de l'accumulateur hydraulique de pression (123; 212, 213), et

c) le système d'alimentation hydraulique comprend une seconde pompe à liquide (209) qui est susceptible d'être mise en circuit lors de la défection de la pompe à liquide (122; 208) et qui est entraînée par un second moteur électrique (207).

2. Servo-entraînement électro-hydraulique selon la revendication 1, caractérisé par le fait que l'accumulateur hydraulique de pression (123) est subdivisé en au moins deux accumulateurs partiels (212, 213), les volumes d'accumulation des accumulateurs partiels étant dimensionnés de telle façon que l'on dispose, même en cas de défection d'un accumulateur partiel, d'une quantité de liquide hydraulique suffisante pour la commande du cylindre de réglage hydraulique (215).

**Claims**

1. Electrohydraulic actuator, for valves, comprising an electrohydraulic transducer (10), a hydraulic adjusting cylinder (11; 215) with an adjusting piston (110, 218) capable of acting, in a opening direction, on a tapering valve member (5; 402), wherein the adjusting piston (110, 218) is spring-loaded by means of a compressed spring (111; 216), the piston resetting with a rapid closing movement when it moves into or occupies the valve opening position, and further comprising a hydraulic fluid container (120; 214) and a fluid pump (122; 208, 209) which is driven by an electric motor (121; 206, 207), and wherein all the component parts are integrated to form a compact drive unit (13; 20) which is disposed on a housing of the valve (3; 40), characterised in that:

a) the actuator is structurally combined with the valve which is an electrically triggered turbine valve, more particularly a control valve, a quick-acting shut-off valve or a by-pass valve,

b) the fluid pump (122; 208, 209) is connected on the pressure side with a hydraulic pressure accumulator (123; 212, 213) having a storage volume which is such that there is at least sufficient hydraulic fluid available from the hydraulic accumulator to allow the valve (3; 40) to be opened fully, wherein the fluid pump (122; 208, 209) is designated to slowly fill up the hydraulic pressure accumulator (123; 212, 213) and the cover leakage losses, and

c) the hydraulic supply system comprises a second fluid pump (209) which is driven by a second electric motor (207) and which can be actuated in the event of failure of the fluid pump (122; 208).

2. Electrohydraulic actuator according to claim 1, characterised in that the hydraulic pressure accumulator (123) is sub-divided into at least two component accumulators (212, 213), wherein the storage volume of the component accumulators is dimensioned such that, even if one component accumulator fails, there is available a quantity of hydraulic fluid sufficient to actuate the hydraulic adjusting cylinder (215).

FIG 1

FIG 2

FIG 3

FIG 4